# EUROPÄISCHE PATENTSCHRIFT

(11) **EP 2 316 713 B1**
(45) Veröffentlichungstag und Bekanntmachung des Hinweises auf die Patenterteilung: **25.09.2019**
(21) Anmeldenummer: 10007552.2
(22) Anmeldetag: 21.07.2010
(51) Int. Cl.: B62D 53/00, B62D 65/18

(54) **Verteilungswagen zum Transport und zum Kommissionieren von Baukomponenten zwischen den Zwischenlagern von einem Herstellungsverfahren**
Distribution cart for the transport and delivery of components in between the intermediate production stocks
Chariot de distribution pour le transport et la livraison de composants entre les entreposages intermédiares lors de la production

(30) Priorität: 28.10.2009 DE 102009050966
(43) Veröffentlichungstag der Anmeldung: 04.05.2011
(73) Patentinhaber: Dr. Ing. h.c. F. Porsche AG, 70435 Stuttgart (DE)
(72) Erfinder: Spahn, Lothar, 74354 Besigheim (DE); Brandtner, Christoph, 70182 Stuttgart (DE); Kost, Uwe, 71717 Beilstein (DE); Ziegler, Erik, 73110 Hattenhofen (DE); Schmidt, Felix, 72649 Wolfschlugen (DE)

(56) Entgegenhaltungen:
- EP-A1- 1 743 828
- FR-A1- 2 955 290
- US-A- 3 550 802
- US-A- 3 861 545

## Beschreibung

Die vorliegende Erfindung betrifft einen Kommissionierwagen zum Transport von Kommissioniergut zu einer Kommissionierstation. Die Erfindung betrifft außerdem eine Kommissioniereinrichtung mit mehreren, mittels eines derartigen Kommissionierwagens be- und entladbaren Kommissionierstationen sowie ein Kommissionierverfahren.

Aus der US 3 550 802 ist eine Transportvorrichtung für Container bekannt, bei der eine Mehrzahl von Container tragenden Fahrzeugen mittels über Gelenkkonstruktionen verbundene Zugstangen z.B. auch über längere Strecken gezogen werden können.

In modernen Produktionsverfahren, insbesondere im modernen Kraftfahrzeugbau, wird zunehmend eine sog. "Just-in-time"-Produktion mit keinen oder lediglich äußerst kleinen Zwischenlagern angestrebt. Generell kann auf derartige Zwischenlager oftmals aber nicht gänzlich verzichtet werden, da bspw. unterschiedliche Ausstattungsvarianten bzw. Baureihen unterschiedliche Baukomponenten erfordern, die dann in diesen Zwischenlagern zumindest kurzfristig gelagert und anschließend kommissioniert werden müssen. Um trotz derartiger Zwischenlager eine effektive Logistik zu erreichen, müssen diese nicht nur zuverlässig, sondern zugleich auch einfach und schnell be- und entladbar sein.

Die vorliegende Erfindung beschäftigt sich mit dem Problem, einen Kommissioniervorgang zu verbessern, insbesondere einen Kommissionierwagen zu schaffen, mittels welchem das Be- und Entladen einer Kommissionierstation besonders einfach und schnell zu bewerkstelligen ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen an sich bekannten Kommissionierwagen zum Transport von Kommissioniergut zu einer Kommissionierstation mit einer starren Deichsel, entlang welcher der Kommissionierwagen verfahrbar ist und die die Länge des Kommissionierwagens übersteigt und in einem Führungsrohr am Kommissionierwagen geführt ist, auszustatten, die die Länge des Kommissionierwagens übersteigt. Der Kommisionierwagen sollte, ohne dass hierzu ein separates Zugfahrzeug eingesetzt werden muss, entlang der Deichsel bewegbar sein. Der Kommissionierwagen kann somit angekuppelt bleiben und wird lediglich entlang seiner Deichsel leicht von Hand verschoben. Der Vorteil eines derartigen, lediglich entlang seiner Deichsel verschiebbaren Kommissionierwagens liegt somit darin, diesen bzgl. einer Be- und Entladezone einer Kommissionierstation einfach positionieren zu können, wodurch ein aufwändiges Rangieren eines Zugfahrzeuges mit den daran angehängten Kommissionierwagen oder das händische Rangieren der Kommissionierwagen entfallen kann. Bspw. kann der mit einem Kommissioniergut bestückte Kommissionierwagen zunächst in eine zu einer Beladezone einer Kommissionierstation gegenüberliegende Position gebracht werden, in welcher das Kommissioniergut an die Kommissionierstation übergeben werden kann. Das Kommissioniergut ist dabei üblicherweise auf einer Trageinheit, bspw. einem Palettenträger, gelagert. Anschließend kann durch eine einfache Längsverschiebung des Kommissionierwagens entlang seiner Deichsel, dieser gegenüberliegend zu einer Entladezone der Kommissionierstation verfahren werden, um dort eine entleerte Trageinheit wiederaufzunehmen. Die Verschiebung des Kommissionierwagens zwischen der Be- und Entladeposition der Kommissionierstation kann dabei ausschließlich durch eine Verschiebung des Kommissionierwagens auf seiner Deichsel erfolgen, ohne dass dieser gänzlich von einem separaten Zugfahrzeug aufwändig bewegt und rangiert werden müsste. Selbstverständlich ist dabei eine Verriegelungseinrichtung vorgesehen, mittels welcher der Kommissionierwagen entlang der Deichsel in den relevanten Positionen fixierbar ist. Diese Verriegelungseinrichtung muss entriegelt werden, um den Kommissionierwagen entlang der Deichsel zu verstellen.

Bei einer vorteilhaften Weiterbildung der erfindungsgemäßen Lösung, weist der Kommissionierwagen Führungsschienen auf, in welchen die Trageinheit geführt ist. Derartige Führungsschienen dienen somit der Führung von bspw. nach unten abstehenden Rollen an der Trageinheit und gewährleisten dadurch eine exakte Bewegung derselben. Gleichzeitig oder zusätzlich können an dem Kommissionierwagen Transportrollenbänder angeordnet sein, die eine Verfahrbewegung der Trageinheit auf dem Kommissionierwagen erleichtern. Derartige Transportrollenbänder bestehen üblicherweise aus einzelnen, leicht gelagerten Rollen, auf welchen die Trageinheit besonders leicht verschoben werden kann.

Bei einer weiteren vorteilhaften Ausführungsform der erfindungsgemäßen Lösung, ist eine Arretiervorrichtung vorgesehen, mittels welcher die Trageinheit und damit auch das zu kommissionierende Gut auf dem Kommissionierwagen arretierbar sind. Eine derartige Arretiervorrichtung ist erforderlich, um insbesondere unerwünschte Querverschiebungen der Trageinheit und damit des Kommissioniergutes während des Transports auf dem Kommissionierwagen sicher ausschließen zu können. Ohne eine derartige Arretiervorrichtung könnte es bspw. möglich sein, dass die Trageinheit und das zu kommissionierende Gut aufgrund von Querbeschleunigungen bei einer Kurvenfahrt des Kommissionierwagens von diesem abfallen und dabei unter Umständen beschädigt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: eine mit einem erfindungsgemäßen Kommissionierwagen be- und entladbare Kommissioniereinrichtung,
- Fig. 2: den erfindungsgemäßen Kommissionierwagen in einer Ansicht,
- Fig. 3-5: jeweils eine Darstellung wie in Fig. 2, jedoch aus einer anderen Perspektive,
- Fig. 6: eine Schnittdarstellung und eine Draufsicht auf den Kommissionierwagen,
- Fi. 7: eine Detaildarstellung der Verriegelungseinrichtung.

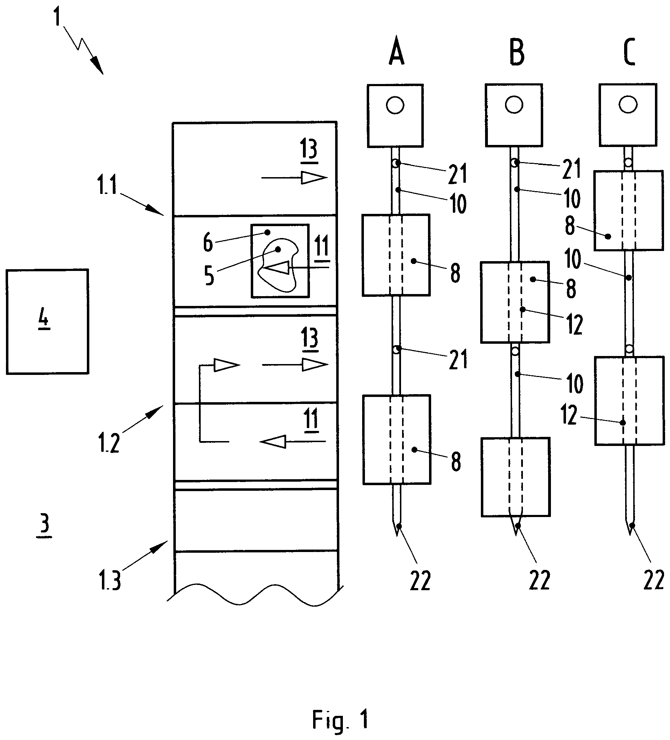

Entsprechend Fig. 1 weist eine Kommissioniereinrichtung 1 mehrere Kommissionierstationen 1.1 bis 1.3 auf. Auf einer Frontseite dieser Kommissionierstationen 1.1 bis 1.3 befindet sich eine Kommissionierstrasse 3, auf welcher ein nicht gezeigter Kommissionierer mit einem Kommissionierregal 4 entlangfahren und entsprechendes Kommissioniergut 5 aus den einzelnen Kommissionierstationen 1.1 bis 1.2 entnehmen kann. Das Kommissioniergut 5 ist dabei üblicherweise auf einer Trageinheit 6, bspw. einem Palettenträger, angeordnet. Be- und Entladen werden die einzelnen Kommissionierstationen 1.1 bis 1.3 von einer Rückseite her, auf welcher sowohl der Antransport von Kommissioniergut 5 als auch der Abtransport von entleerten Trageinheiten 6 mittels Kommissionierwagen 8 erfolgt. Diese Kommissionierwagen 8 werden dabei üblicherweise von einem Zugfahrzeug gezogen.

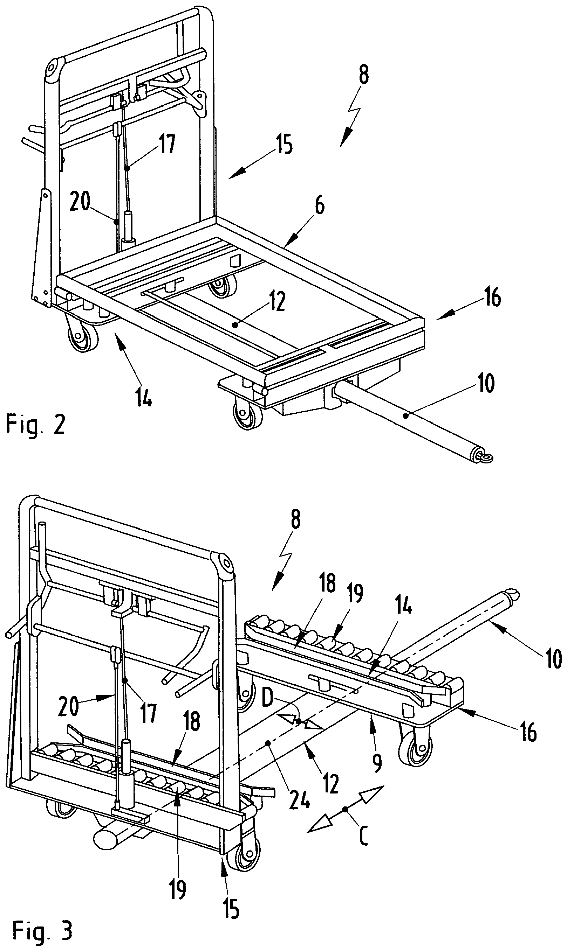

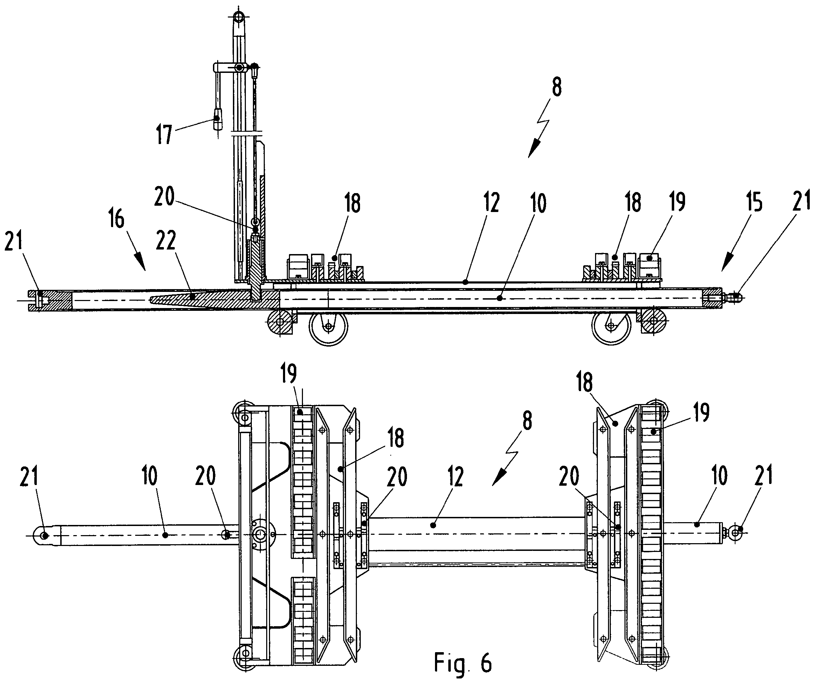

Erfindungsgemäß weisen nun die Kommissionierwagen 8 (vgl. die Fig. 2 bis 6) eine starre Deichsel 10 auf, die die Länge des Kommissionierwagens 8 übersteigt, beispielsweise doppelt so lang ist, und entlang welcher der Kommissionierwagen 8 verfahrbar ist, ohne dass dieser hierzu mittels des separaten Zugfahrzeugs bewegt werden müsste. Zumindest an einem vorderen Längsende weisen die Deichseln 10 jeweils eine Kupplungseinrichtung 21 auf, über welche der Kommissionierwagen 8 mit weiteren Kommissionierwagen 8 und/oder mit dem Zugfahrzeug koppelbar ist. An einem hinteren Längsende der Deichsel 10 kann ebenfalls eine Kupplungseinrichtung 21 oder aber eine dornförmige Verjüngung 22 vorgesehen sein, sofern es sich um einen Schlusswagen handelt.

In Fig. 1 sind drei Situationen A, B und C dargestellt:
In der Situation A, welche einem Antransport von Kommissioniergut 5 entspricht, befinden sich die Kommissionierwagen ca. in der Längsmitte der Deichsel 10 und damit zwischen eine Beladezone 11 und einer Entladezone 13. In dieser Positionierung kann das angelieferte Kommissioniergut 5 zwar nicht vom Kommissionierwagen 8 in die Beladezone 11 der jeweiligen Kommissionierstation 1.1 und 1.2 verschoben werden, die Kommissionierwagen 8 weisen aber eine hohe Spurtreue auf und lassen sich daher einfach manövrieren. Zum Erreichen der Beladezone 11 wird nun der Kommissionierwagen 8 entlang der Deichsel 10 verfahren (vgl. Situation B), ohne dass dieser hierzu mittels eines separaten Zugfahrzeugs bewegt werden muss. Die Deichsel 10 ist dabei starr ausgebildet und in einem Führungsrohr 12 längsverschieblich gelagert (vgl. auch Fig. 2 und 3).
In der Situation B ist nun der Kommissionierwagen 8 entlang seiner Deichsel 10 bis zur Beladezone 11 verfahren, arretiert und gegenüberliegend der Beladezone 11 angeordnet, so dass die Trageinheit 6 samt Kommissioniergut 5 an die Beladezone 11 der Kommissionierstation 1.1 übergeben werden kann. Nach der Übergabe der Trageinheit 6 an die Beladezone 11 wird der Kommissionierwagen 8 wiederum entlang seiner Deichsel 10 - diesmal jedoch in die andere Richtung - verschoben und zwar soweit, bis er gegenüberliegend der Entladezone 13 positioniert ist und eine entleerte Trageinheit 6 aufnehmen kann, in Situation C dargestellt. Selbstverständlich ist dabei eine Verriegelungseinrichtung vorgesehen ist, mittels welcher der Kommissionierwagen 8 entlang der Deichsel 10 in den Situationen A, B und C zumindest zwei unterschiedlichen Positionen fixierbar ist.

Diese Verriegelungseinrichtung ist mit einem Entriegelungshebel 17 lösbar. Wird der Entriegelungshebel 17 betätigt, so kann der Kommissionierwagen 8 auf seiner Deichsel 10 gemäß der Pfeilrichtung C (Fig. 3) hin- und herbewegt werden.

Mit derartig erfindungsgemäß ausgebildeten Kommissionierwagen 8 im Zusammenspiel mit zugehörigen Kommissionierstationen 1.1 und 1.2 kann somit ein geschlossener Materialkreislauf geschaffen werden, welcher das Be- und Entladen der Kommissionierstation 1.1 bis 1.3 einfach und schnell gestaltet. Die Anzahl der Kommissionierstationen 1.1-1.3 bzw. der Kommissionierwagen 8 sind dabei gemäß der Fig. rein exemplarisch zu verstehen.

Betrachtet man die Fig. 2 bis 6, so kann man erkennen, dass der Kommissionierwagen 8 eine Aufnahmestruktur 14 zur Aufnahme der das Kommissioniergut 5 tragenden Trageinheit 6 aufweist. Diese Aufnahmestruktur 14 besteht prinzipiell aus einem vorderen Abschnitt 15 sowie einem hinteren Abschnitt 16, die durch das Führungsrohr 12 miteinander verbunden sind. Das Führungsrohr 12 dient somit nicht nur der Aufnahme und Führung der Deichsel 10, sondern zugleich auch als Längsträger.

Betrachtet man die Fig. 3 bis 6, so kann man erkennen, dass der Kommissionierwagen 8 Führungsschienen 18 aufweist, in welchen die Trageinheit 6 in Fahrzeugquerrichtung geführt ist. Diese Führungsschienen 18 sind dabei jeweils endseitig aufgeweitet, um eine Aufnahme von an der Trageinheit 6 unten angeordneten Rollen zu erleichtern. Ein Beladen des Kommissionierwagens 8 ist dabei aus beiden Querrichtungen möglich. Darüber hinaus kann der Kommissionierwagen 8 zusätzlich Transportrollenbänder 19 aufweisen, die eine Verfahrbewegung der Trageinheit 6 und damit auch des darauf abgestellten Kommissioniergutes 5 erleichtern.

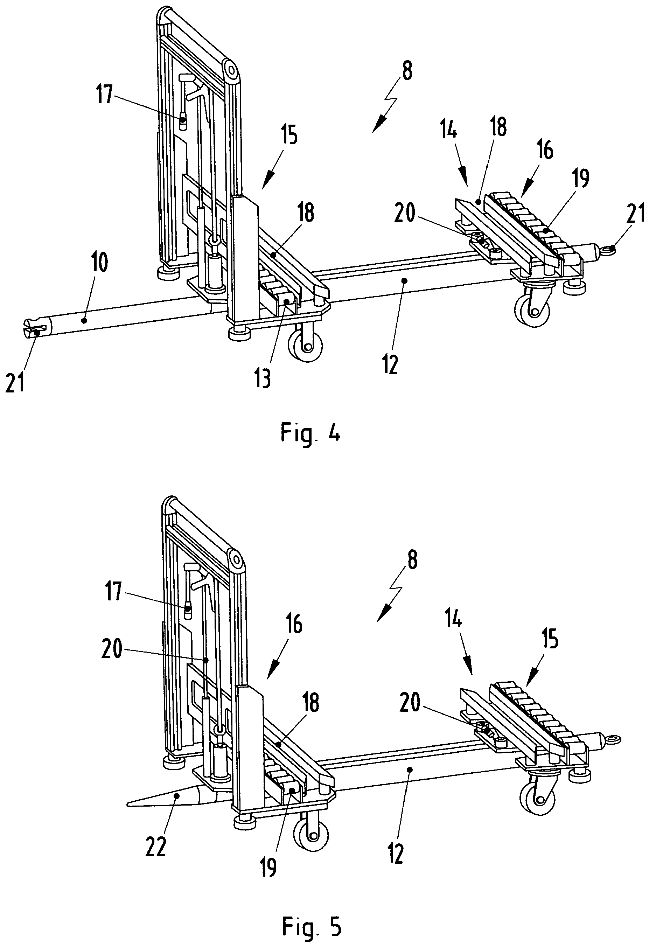

Betrachtet man die Fig. 4, so kann man erkennen, dass der Kommissionierwagen 8 in unbeladenem Zustand einen H-förmigen Querschnitt aufweist, was einem Werker insbesondere eine leichte Zugänglichkeit zur Kommissionierstation 1.1 sowie auch ein leichtes Überqueren des Kommissionierwagens 8 ermöglicht.

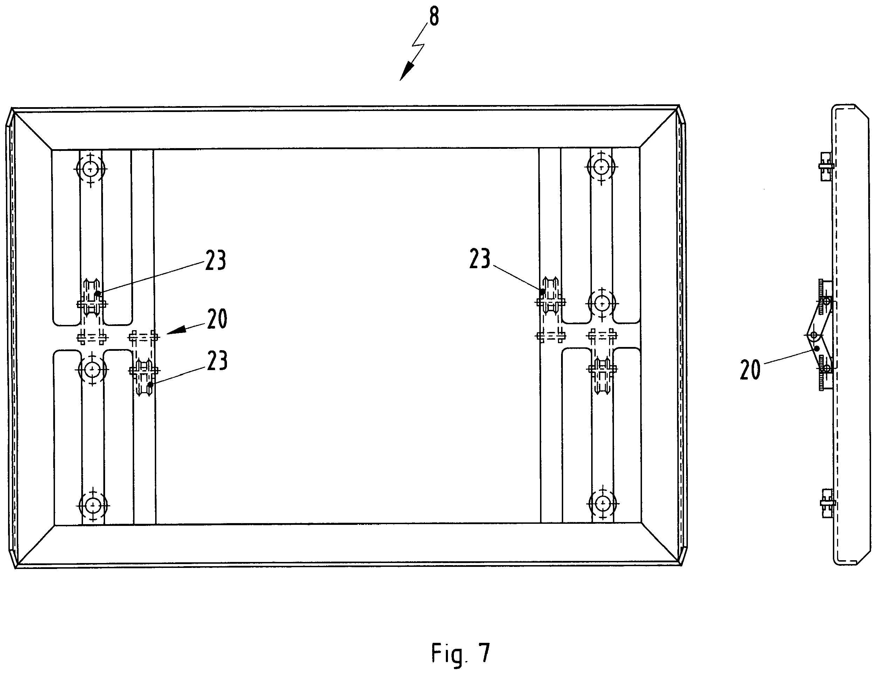

Des Weiteren ist an jedem Kommissionierwagen 8 gemäß Fig. 7 eine Arretiervorrichtung 20 vorgesehen, mit welcher die Trageinheit 6 und damit auch das zu kommissionierende Gut 5 auf dem Kommissionierwagen 8 arretierbar sind. Diese Arretiervorrichtung 20 besitzt führungsschienenseitige Halteelemente 23, die in arretiertem Zustand mit trageinheitsseitigen Laschen zusammenwirken und ein Abrutschen der Trageinheit 6 und damit des zu kommissionierenden Gutes 5 von dem Kommissionierwagen 8 in beide Richtungen verhindern. Vorzugsweise sind dabei je Kommissionierwagen 8 jeweils zwei Halteelemente 23 und je Trageinheit 6 zwei zugehörige Laschen vorgesehen. Die Arretiervorrichtung 20 wirkt somit auf die Halteelemente 23 und Laschen sowohl im vorderen Abschnitt 15 als auch im hinteren Abschnitt 16 (vgl. Fig. 7).

Selbstverständlich kann dabei der Kommissionierwagen 8 entlang der Deichsel 10 von Hand oder bspw. mittels einer nicht näher bezeichneten Verstelleinrichtung verstellt werden, wobei die Ausführungsvariante mit Verstelleinrichtung den Bedienkomfort nochmals steigern könnte.

Eine Be- und Entladung der einzelnen, gemäß der Fig. 1 dargestellten Kommissionierstationen 1.1 bis 1.3, erfolgt dabei wie folgt:
Zunächst wird mittels der Kommissionierwagen 8 ein Antransport von auf jeweils einer Trageinheit 6 befindlichem Kommissioniergut 5 zu den jeweiligen Kommissionierstationen 1.1 bis 1.3 bewerkstelligt (vgl. Situation A in Fig. 1), wobei sich der Kommissionierwagen 8 ca. in Längsmitte der Deichsel 10 befindet. In dieser Position lässt sich der Kommissionierwagen besonders leicht und spurtreu fahren.

Anschließend wird die Verriegelungseinrichtung vom Werker mittels des Entriegelungshebels 17 gelöst und der Kommissionierwagen 8 entlang seiner Deichsel 10 zur Beladezone 11 der Kommissionierstation 1.1 verfahren. Hier rastet die Verriegelungseinrichtung vorzugsweise automatisch ein. Nach dem Erreichen der Beladezone 11 und dem Verriegeln erfolgt die Übergabe der Trageinheit 6 samt Kommissioniergut 5 vom Kommissionierwagen 8 zur Beladezone 11 der Kommissionierstation 1.1 - vgl. Situation B.

Danach wird die Verriegelungseinrichtung vom Werker erneut mittels des Entriegelungshebels 17 gelöst und der Kommissionierwagen 8 entlang seiner Deichsel 10 zur Entladezone 13 der Kommissionierstation 1.1 verfahren, wo eine Übergabe der entleerten Trageinheit 6 von der Entladezone 13 auf den Kommissionierwagen 8 erfolgt. Ist die entleerte Trageinheit auf dem Kommissionierwagen 8 positioniert und arretiert, kann der Werker den Kommissionierwagen 8 entlang seiner Deichsel 10 zurück in die Ausgangsposition A verfahren.

Mit dem erfindungsgemäßen Kommissionierwagen 8 kann somit ein Be- und Entladen einzelner Kommissionierstationen 1.1 bis 1.3 deutlich einfacher erfolgen, insbesondere ohne dass hierfür ein aufwändiges Rangieren erforderlich wäre.

## Patentansprüche

1. Kommissionierwagen (8) zum Transport von Kommissioniergut (5) zu einer Kommissionierstation (1.1 - 1.3), wobei der Kommisionierwagen (8) entlang einer starren Deichsel (10) verfahrbar geführt ist, die die Länge des Kommissionierwagens (8) übersteigt, **dadurch gekennzeichnet, dass** die starre Deichsel (10) in einem Führungsrohr (12) am Kommissionierwagen (8) geführt ist, welches sich als Längsträger in Wagenlängsrichtung erstreckt.

2. Kommissionierwagen nach Anspruch 1, **dadurch gekennzeichnet, dass** der Kommissionierwagen (8) eine Aufnahmestruktur (14) zur Aufnahme einer das Kommissioniergut (5) tragenden Trageinheit (6) aufweist.

3. Kommissionierwagen nach Anspruch 2, **dadurch gekennzeichnet, dass** der Kommissionierwagen (8) Führungsschienen (18) aufweist, in welchen die Trageinheit (6) geführt ist.

4. Kommissionierwagen nach einem der Ansprüche 1 bis 3,
**dadurch gekennzeichnet, dass**
der Kommissionierwagen (8) für eine Verfahrbewegung des Kommissionierguts (5) Transportrollenbänder (19) aufweist.

5. Kommissionierwagen nach einem der Ansprüche 1 bis 4, **dadurch gekennzeichnet, dass** eine Verriegelungseinrichtung vorgesehen ist, mittels welcher der Kommissionierwagen entlang der Deichsel (10) in zumindest zwei unterschiedlichen Positionen fixierbar ist.

6. Kommissionierwagen nach einem der Ansprüche 3 bis 5, **dadurch gekennzeichnet, dass** die Führungsschienen (18) in Wagenquerrichtung angeordnet und endseitig aufgeweitet sind.

7. Kommissionierwagen nach einem der Ansprüche 2 bis 6, **dadurch gekennzeichnet, dass** eine Arretiervorrichtung (20) vorgesehen ist, mittels welcher die Trageinheit (6) und damit auch das zu kommissionieren Gut (5) auf dem Kommissionierwagen (8) arretierbar sind.

8. Kommissionierwagen nach Anspruch 7, **dadurch gekennzeichnet, dass** die Arretiervorrichtung (20) trageinheitseitige Bolzen und führungsschienenseitige Halteelemente aufweist.

9. Kommissionierwagen nach einem der Ansprüche 1 bis 8, **dadurch gekennzeichnet, dass** die Deichsel (10) an ihrem vorderen und hinteren Längsende eine Kupplungseinrichtung (21) aufweist, über welche der Kommissionierwagen (8) mit weiteren Kommissionierwagen (8) und/oder mit einem Zugfahrzeug koppelbar ist, oder dass die Deichsel (10) an ihrem vorderen Längsende eine Kupplungseinrichtung (21) aufweist und sich an ihrem hinteren Längsende dornförmig verjüngt.

10. Kommissioniereinrichtung (1) mit zumindest einer Kommissionierstation (1.1-1.3), die von einer Rückseite her be- und entladbar ist und an einer Frontseite das zu kommissionierende Gut (5) auf einer Trageinheit (6) bereitstellt, wobei jede Kommissionierstation (1.1-1.3) eine Beladezone (11) und eine benachbarte Entladezone (13) aufweist, und mit einem von einem Zugfahrzeug gezogenen Kommissionierwagen (8) nach einem der Ansprüche 1 bis 9,
**dadurch gekennzeichnet, dass**
der Kommissionierwagen (8) ohne Bewegen des Zugfahrzeugs allein durch eine Verschiebung entlang seiner Deichsel (10) zwischen der Be- und der Entladezone (11,13) der Kommissionierstation (1.1-1.3) verfahrbar ist.

11. Kommissionierverfahren unter Verwendung einer Kommissioniereinrichtung (1) nach Anspruch 10, **gekennzeichnet durch** folgende Verfahrensschritte,
- Antransport von auf einer Trageinheit (6) befindlichem Kommissioniergut (5) zu einer Kommissionierstation (1.1-1.3) mittels eines Kommissionierwagens (8),
- Verfahren des Kommissionierwagens (8) entlang seiner Deichsel (10) zur Beladezone (11) der Kommissionierstation (1.1-1.3),
- Übergabe der Trageinheit (6) samt Kommissioniergut (5) vom Kommissionierwagen (8) zur Beladezone (11) der Kommissionierstation (1.1-13),
- Verfahren des Kommissionierwagens (8) entlang seiner Deichsel (10) zur Entladezone (13) der Kommissionierstation (1.1-1.3),
- Übergabe der entleerten Trageinheit (6) von der Entladezone (13) auf den Kommissionierwagen (8),
- Verfahren des Kommissionierwagens (8) entlang seiner Deichsel (10) zurück in die Ausgangsposition,
- Abtransport der Trageinheit (6) mittels des Kommissionierwagens (8).

## Claims

1. Order-picking carriage (8) for transporting an article (5) to be picked to an order-picking station (1.1 - 1.3), wherein the order-picking carriage (8) is guided movably along a rigid drawbar (10) which projects beyond the length of the order-picking carriage (8), **characterized in that** the rigid drawbar (10) is guided in a guide tube (12) on the order-picking carriage (8) that extends as a longitudinal member in the carriage longitudinal direction.

2. Order-picking carriage according to Claim 1, **characterized in that** the order-picking carriage (8) has a receiving structure (14) for receiving a carrying unit (6) which carries the article (5) to be picked.

3. Order-picking carriage according to Claim 2, **characterized in that** the order-picking carriage (8) has guide rails (18) in which the carrying unit (6) is guided.

4. Order-picking carriage according to one of Claims 1 to 3, **characterized in that** the order-picking carriage (8) has transport roller belts (19) for a displacement movement of the article (5) to be picked.

5. Order-picking carriage according to one of Claims 1 to 4, **characterized in that** a locking device is provided by means of which the order-picking carriage can be fixed along the drawbar (10) in at least two different positions.

6. Order-picking carriage according to one of Claims 3 to 5, **characterized in that** the guide rails (18) are arranged in the carriage transverse direction and widened at the ends.

7. Order-picking carriage according to one of Claims 2 to 6, **characterized in that** an arresting device (20) is provided by means of which the carrying unit (6), and hence also the article (5) to be picked, can be arrested on the order-picking carriage (8).

8. Order-picking carriage according to Claim 7, **characterized in that** the arresting device (20) has bolts on the carrying unit and holding elements on the guide rails.

9. Order-picking carriage according to one of Claims 1 to 8, **characterized in that** the drawbar (10) has, at its front and rear longitudinal end, a coupling device (21) via which the order-picking carriage (8) can be coupled to further order-picking carriages (8) and/or to a towing vehicle, or **in that** the drawbar (10) has a coupling device (21) at its front longitudinal end and tapers in the form of a spike at its rear longitudinal end.

10. Order-picking device (1) with at least one order-picking station (1.1 - 1.3), which can be loaded and unloaded from a rear side and provides the article (5) to be picked on a carrying unit (6) on a front side, wherein each order-picking station (1.1 - 1.3) has a loading zone (11) and an adjacent unloading zone (13), and with an order-picking carriage (8) according to one of Claims 1 to 9 that is towed by a towing vehicle, **characterized in that** the order-picking carriage (8), without movement of the towing vehicle, is moveable solely by a displacement along its drawbar (10) between the loading and the unloading zone (11, 13) of the order-picking station (1.1 - 1.3).

11. Order-picking method using an order-picking device (1) according to Claim 10, **characterized by** the following method steps:
- inward transport of an article (5) to be picked situated on a carrying unit (6) to an order-picking station (1.1 - 1.3) by means of an order-picking carriage (8),
- movement of the order-picking carriage (8) along its drawbar (10) to the loading zone (11) of the order-picking station (1.1 - 1.3),
- transfer of the carrying unit (6) together with the article (5) to be picked from the order-picking carriage (8) to the loading zone (11) of the order-picking station (1.1 - 13),
- movement of the order-picking carriage (8) along its drawbar (10) to the unloading zone (13) of the order-picking station (1.1 - 1.3),
- transfer of the emptied carrying unit (6) from the unloading zone (13) to the order-picking carriage (8),
- movement of the order-picking carriage (8) along its drawbar (10) back into the starting position,
- transport away of the carrying unit (6) by means of the order-picking carriage (8).

## Revendications

1. Chariot de préparation (8) servant au transport de marchandises à préparer (5) vers une station de préparation (1.1 - 1.3), le chariot de préparation (8) étant guidé avec mobilité le long d'un timon rigide (10) qui excède la longueur du chariot de préparation (8), **caractérisé en ce que** le timon rigide (10) est guidé dans un tube de guidage (12) au niveau du chariot de préparation (8), lequel s'étend dans le sens longitudinal du chariot sous la forme d'un longeron.

2. Chariot de préparation selon la revendication 1, **caractérisé en ce que** le chariot de préparation (8) possède une structure d'accueil (14) destinée à accueillir une unité porteuse (6) qui porte les marchandises à préparer (5).

3. Chariot de préparation selon la revendication 2, **caractérisé en ce que** le chariot de préparation (8) possède des rails de guidage (18) dans lesquels est guidée l'unité porteuse (6).

4. Chariot de préparation selon l'une des revendications 1 à 3, **caractérisé en ce que** le chariot de préparation (8) possède des bandes à rouleaux de transport (19) pour un mouvement de déplacement des marchandises à préparer (5).

5. Chariot de préparation selon l'une des revendications 1 à 4, **caractérisé en ce qu'**un dispositif de verrouillage est présent, au moyen duquel le chariot de préparation peut être immobilisé le long du timon (10) dans au moins deux positions différentes.

6. Chariot de préparation selon l'une des revendications 3 à 5, **caractérisé en ce que** les rails de guidage (18) sont disposés dans le sens transversal du chariot et sont élargis du côté de l'extrémité.

7. Chariot de préparation selon l'une des revendications 2 à 6, **caractérisé en ce qu'**un dispositif de blocage (20) est présent, au moyen duquel l'unité porteuse (6) et ainsi également les marchandises à préparer (5) peuvent être bloquées sur le chariot de préparation (8).

8. Chariot de préparation selon la revendication 7, **caractérisé en ce que** le dispositif de blocage (20) possède des goujons du côté de l'unité porteuse et des éléments de maintien du côté des rails de guidage.

9. Chariot de préparation selon l'une des revendications 1 à 8, **caractérisé en ce que** le timon (10) possède au niveau de son extrémité longitudinale avant et arrière un dispositif d'accouplement (21) par le biais duquel le chariot de préparation (8) peut être accouplé à un chariot de préparation (8) supplémentaire et/ou à un véhicule tracteur, ou **en ce que** le timon (10) possède au niveau de son extrémité longitudinale avant un dispositif d'accouplement (21) et se rétrécit en forme de tourillon au niveau de son extrémité arrière.

10. Dispositif de préparation (1) comprenant au moins une station de préparation (1.1 - 1.3) qui peut être chargée et déchargée depuis un côté arrière et qui met à disposition les marchandises à préparer (5) sur une unité porteuse (6) au niveau d'un côté frontal, chaque station de préparation (1.1 - 1.3) possédant une zone de chargement (11) et une zone de déchargement (13) voisine, et comprenant un chariot de préparation (8) selon l'une des revendications 1 à 9 tracté par un véhicule tracteur, **caractérisé en ce que**
le chariot de préparation (8) peut être déplacé entre les zones de chargement et de déchargement (11, 13) de la station de préparation (1.1 - 1.3) sans bouger le véhicule tracteur uniquement par un coulissement le long de son timon (10).

11. Procédé de préparation en utilisant un dispositif de préparation (1) selon la revendication 10, **caractérisé par** les étapes de procédé suivantes :
- transport d'amenée de marchandises à préparer (5) qui se trouvent sur une unité porteuse (6) à une station de préparation (1.1 - 1.3) au moyen d'un chariot de préparation (8),
- déplacement du chariot de préparation (8) le long de son timon (10) vers la zone de chargement (11) de la station de préparation (1.1 - 1.3),
- transfert de l'unité porteuse (6) avec les marchandises à préparer (5) du chariot de préparation (8) à la zone de chargement (11) de la station de préparation (1.1 - 13),
- déplacement du chariot de préparation (8) le long de son timon (10) vers la zone de déchargement (13) de la station de préparation (1.1 - 1.3),
- transfert de l'unité porteuse (6) vidée de la zone de déchargement (13) sur le chariot de préparation (8),
- déplacement du chariot de préparation (8) le long de son timon (10) en retour à la position initiale,
- transport d'enlèvement de l'unité porteuse (6) au moyen du chariot de préparation (8).
